# EUROPEAN PATENT SPECIFICATION

(11) **EP 4 158 213 B1**
(45) Date of publication and mention of the grant of the patent: **30.07.2025**
(21) Application number: 21733545.4
(22) Date of filing: 28.05.2021
(51) Int. Cl.: F16C 33/78, F16C 35/06, F16C 19/16, F16C 33/66, F16C 35/04

(54) **ROTATABLE SUPPORT WITH FLANGED JOURNAL**
DREHBARE HALTERUNG MIT FLANSCHZAPFEN
SUPPORT ROTATIF À TOURILLON À BRIDE

(30) Priority: 29.05.2020 IT 202000012952; 29.05.2020 IT 202000003001 U
(43) Date of publication of application: 05.04.2023
(73) Proprietor: Maschio Gaspardo S.p.A., 35011 Campodarsego (PD) (IT)
(72) Inventor: MASCHIO, Andrea, 33075 Morsano Al Tagliamento (PN) (IT); BARALDI, Paolo, 35137 Padova (IT)
(74) Representative: Locas, Davide
(86) International application number: PCT/IB2021/054691
(87) International publication number: WO 2021/240457

(56) References cited:
- EP-A1- 3 626 039
- WO-A1-2017/115285
- WO-A1-2020/094578
- FR-A1- 2 304 822
- US-A- 2 712 966

## Description

The present invention relates to a rotatable support with flanged journal and an agricultural machine comprising such a support.

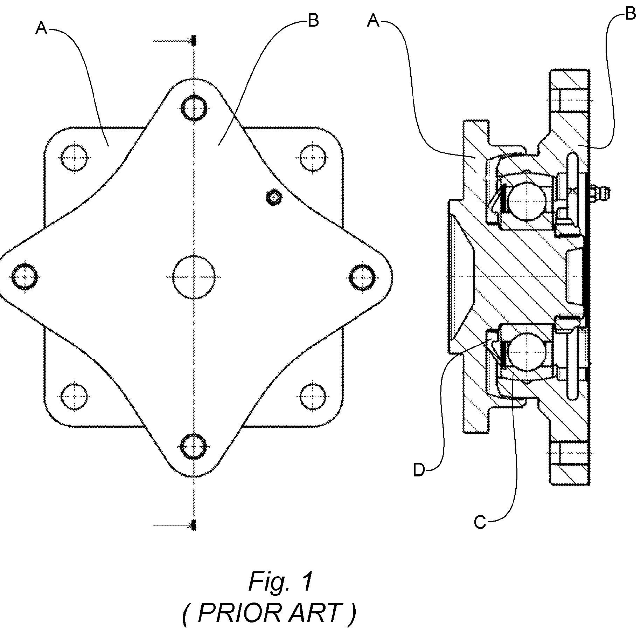

A rotatable support with flanged journal constructed according to the prior art is shown in Figure 1. The support according to the prior art comprises a first flanged element A, a second flanged element B, and a rolling bearing C. The first flanged element A includes a first flange and a journal which extends axially from the first flange. The second flanged element B includes a second flange and a collar which extends axially from the second flange. There is interposed between the journal and the collar the rolling bearing C, by means of which the first flanged element A is rotatably supported on the second flanged element B.

The rotatable support with flanged journal can be stressed in the presence of external contaminants, such as, for example, earth or dust which are introduced into the rolling bearing C, accelerating the wear thereof and reducing the service-life of the rotatable support.

In order to address this problem, there is provided a sealing ring D which is interposed between the first flange and the rolling bearing C.

While improving the service-life of the rolling bearing and of the support overall, the sealing ring D does not satisfactorily solve the problem of protecting the rolling bearing. This is because the dirt can be introduced into the rolling bearing despite the presence of the sealing ring.

This problem is particularly perceived in the presence of heavy loading cycles which amplify the harmful effect of the contamination of the rolling bearing.

Moreover, the introduction of dust and dirt into the rolling bearing inevitably increases the consumption of power during the rotation of the bearing itself. There have been made various attempts to solve the problem of constructing a rotatable support which is resistant and durable. Some examples of rotatable supports with flanged journal are described in US 2712966, EP 3626039 or WO 2017/115285. EP 3626039 describes a rotatable support according to the preamble of claim 1.

The problem has evident difficulties, furthermore as a result of the need to limit the number of additional components which affect the cost and the complexity of the support.

This problem is particularly perceived in the context of agricultural machines. For example, some agricultural machines include rollers for levelling the ground after it has been worked and to prepare the seedbed.

In this context, the rollers are associated with the frame of the agricultural machine by means of rotatable supports comprising rolling bearings which can reduce the rolling friction of the rollers themselves.

In this context, the operative conditions of the rolling bearings are particularly heavy. In fact, the rolling bearings are exposed to the contamination of mud, earth or dust which are introduced between the rolling members and the relevant rolling tracks. Furthermore, the roller applies a mechanical action to irregular ground, transmitting variable loads to the rolling bearings. As a result of these problems, the rolling bearings are subjected to rapid deterioration.

The technical problem addressed by the present invention is to provide a rotatable support and an agricultural machine which comprises such a support which are structurally and functionally configured to at least partially overcome one or more of the disadvantages set out with reference to the cited prior art.

This problem is solved by the invention by means of a rotatable support and an agricultural machine comprising one or more of the features of the appended claims.

According to the invention this problem is solved by constructing a rotatable support with flanged journal comprising a first flanged element, a second flanged element, a rolling bearing and a sealing ring, as defined in claim 1.

According to the invention, the first flanged element includes a first flange, a journal which extends axially from the first flange and a first collar which is coaxial relative to and which also extends with the journal.

The second flanged element includes a second flange and a second collar which extends axially from the second flange, there being interposed between the journal and second collar a rolling bearing by means of which the first flanged element is rotatably supported on the second flanged element, the first collar and second collar being at least partially axially superimposed.

The sealing ring is interposed between the first flanged element and second flanged element in order to define a protected chamber for receiving the rolling bearing, the sealing ring being applied between the first collar and the second collar in the respective superimposition zone.

The sealing ring comprises a retaining ring and an elastomer ring which are connected to each other, the retaining ring being constructed from a material with greater stiffness with respect to a material from which the elastomer ring is constructed, the retaining ring being connected to one of the first and second collar, the elastomer ring being configured to slide in a sealing manner against the other of the first and second collar.

According to the invention, since the retaining ring is constructed from a material with greater stiffness with respect to the material from which the elastomer ring is constructed, it is possible to ensure a more stable connection between the retaining ring and the collar with which the retaining ring is associated.

In a preferred embodiment, the sealing ring comprises a metal ring and an elastomer ring which are co-moulded. Preferably, the metal ring engages in the first collar while the elastomer ring is configured to slide in a sealing manner against the second collar.

In this manner, the rolling bearing is advantageously received inside the chamber which is defined between the first flanged element, the sealing ring and the second flanged element and, at that location, is screened and protected against the ingress of external agents such as dust and fluids, thereby increasing the service-life of the rotatable support.

It will be appreciated that, preferably, the protected chamber for receiving the rolling bearing is fluid-tight.

The technical validity of the present invention has been verified by the Applicant after carrying out bench tests and field tests, subjecting the rotatable support to hundreds of hours of application in a dusty environment and in the presence of mud and water.

Furthermore, it must be observed that the sealing ring promotes the sealing in place of the lubricating grease present inside the protected chamber for receiving the bearing, thereby contributing to further preserving the bearing itself.

In an aspect, the present invention relates to an agricultural machine comprising a rotor (for example, a roller), a frame and one or more rotatable supports with flanged journal which are configured to rotatably secure the rotor (for example, the roller) to the frame of the agricultural machine.

The features and advantages of the invention will be better appreciated from the following detailed description of a preferred though non-limiting embodiment thereof which is illustrated by way of non-limiting example with reference to the appended drawings, in which:
- Figure 1 illustrates a rotatable support with flanged journal according to the prior art;
- Figure 2 is an exploded view of the rotatable support with flanged journal according to the present invention;
- Figure 3 is a perspective view of the assembled support of Figure 2;
- Figure 4 is a front view of the support of Figure 3;
- Figure 5 is a cross-section in accordance with the line V-V of the support of Figure 4;
- Figures 6 and 7 are perspective views of details of Figure 2;
- Figure 8 illustrates a detail of Figure 5;
- Figure 9 is an exploded view of an agricultural machine comprising the support of Figure 2.

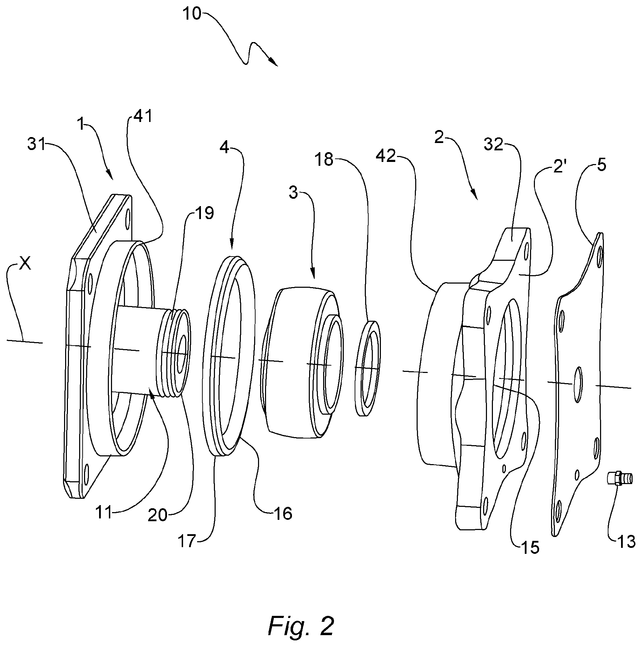

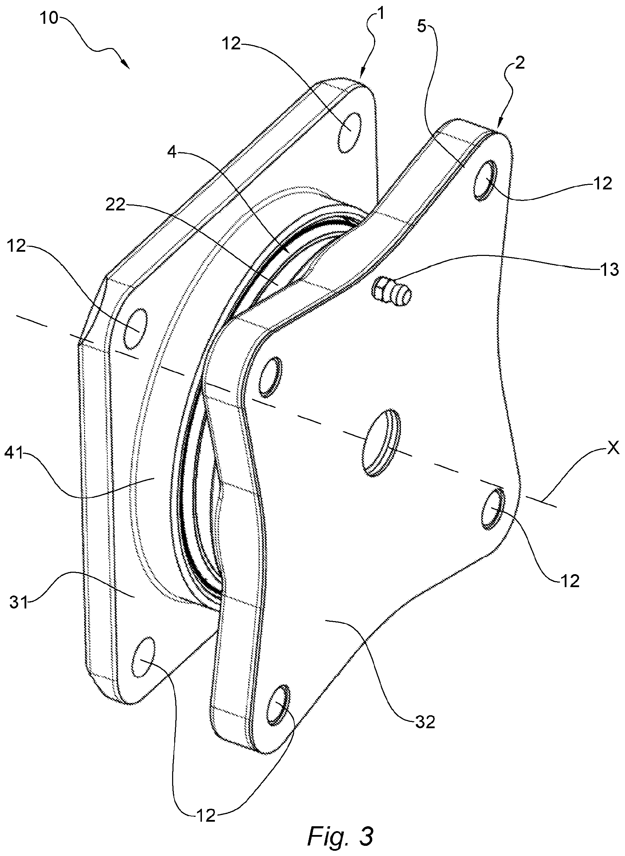

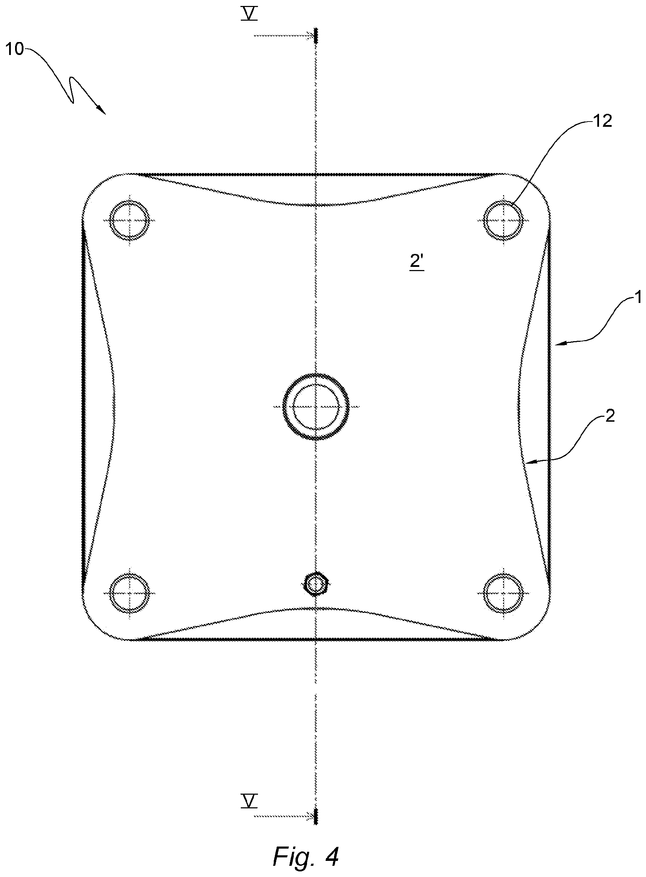

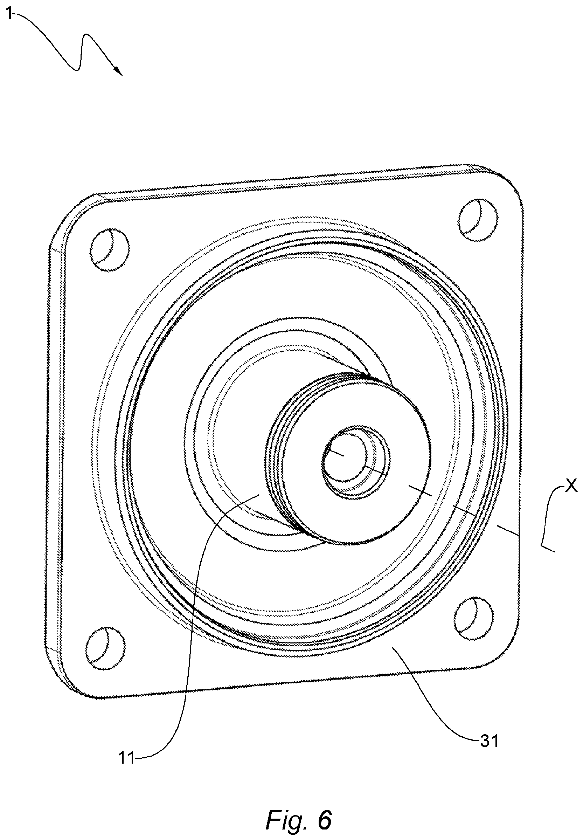

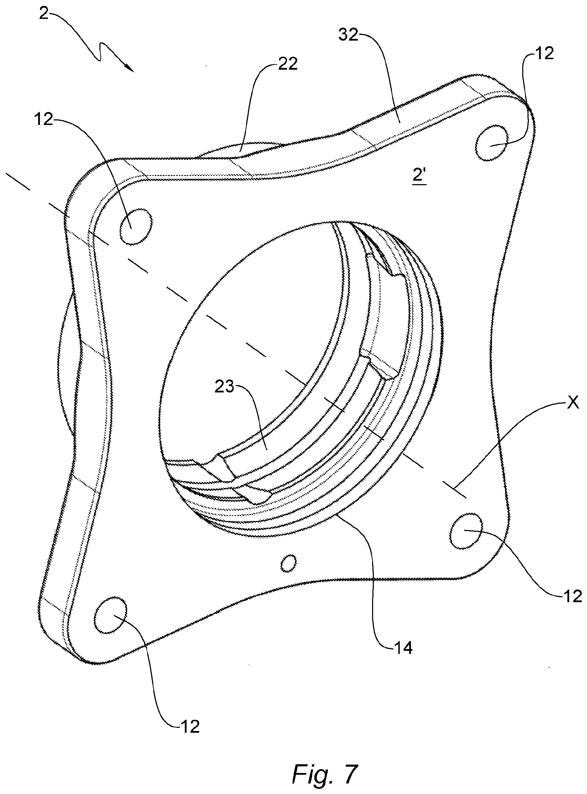

In Figures 2 to 9, there is generally designated 10 a rotatable support with flanged journal.

As shown in Figure 2, the rotatable support 10 comprises a first flanged element 1, a second flanged element 2, a rolling bearing 3 and a sealing ring 4. The first flanged element 1 includes a first flange 31, a journal 11 which extends axially from the first flange 31 along an axis X and a first collar 41 which is coaxial relative to and which also extends with the journal 11.

The second flanged element 2 includes a second flange 32 and a second collar 42 which extends axially from the second flange 32 along the axis X.

The first collar 41 develops from the first flange 41 towards the second flanged element 2, while the second collar 42 develops from the second flange 42 towards the first flanged element 1. Preferably, the first collar 41 has a diameter greater than the second collar 42.

There is interposed between the journal 11 and second collar 42 the rolling bearing 3 by means of which the first flanged element 1 is rotatably supported on the second flanged element 2 about the axis X.

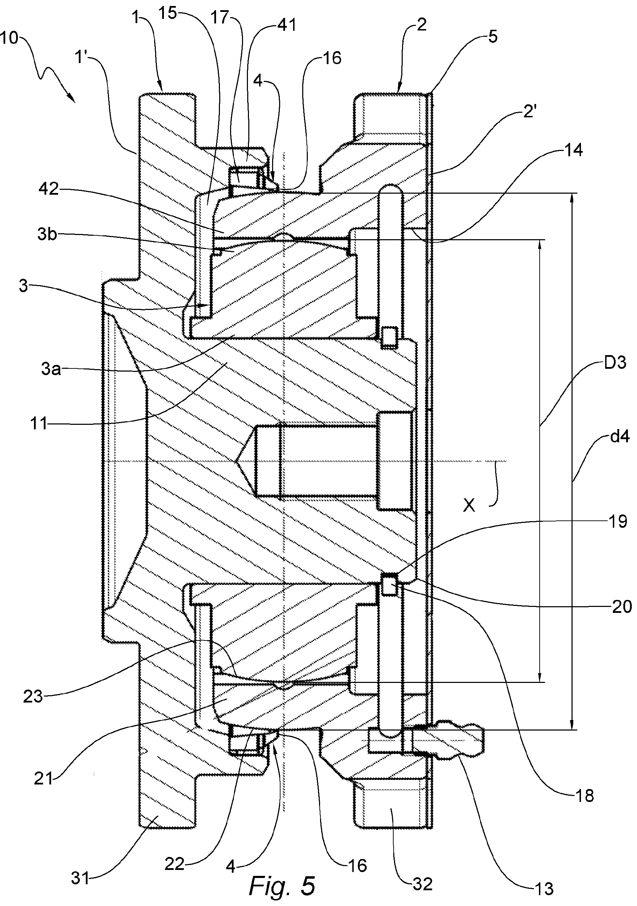

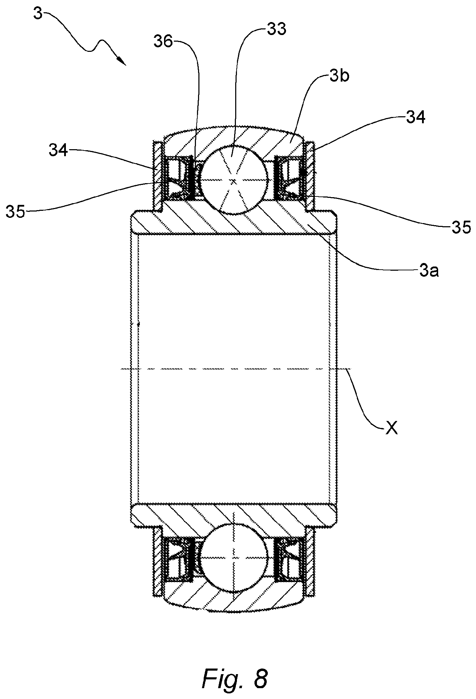

It will be appreciated that, in an aspect, the rolling bearing 3 comprises an internal ring 3a and an external ring 3b, as shown in Figure 8. Advantageously, the internal ring 3a engages with the journal 11 while the external ring 3b preferably engages in a seat 23 which is defined by the second collar 42, as shown in Figure 5.

There is preferably provided a locking ring 18 which engages against an abutment 19 at the end 20 of the journal 11 so as to prevent the disengagement of the rolling bearing 3 from the journal 11. In some preferred embodiments, the locking ring 18 is a circlip of the Seeger type.

As shown in Figure 5, the sealing ring 4 is interposed between the first flanged element 1 and second flanged element 2 in order to define a protected chamber 15 for receiving the rolling bearing 3. In a preferred embodiment, there is provided a single sealing ring 4, it being understood that in some embodiments there may be envisaged two or more sealing rings.

It must be observed that the first collar 41 and the second collar 42 are at least partially axially superimposed and the sealing ring 4 is applied between the first collar 41 and the second collar 42 in the respective superimposition zone.

It will be appreciated that, advantageously, the first flanged element 1, the second flanged element 2, the rolling bearing 3 and the sealing element 4 are arranged coaxially along the axis X.

According to the invention, the sealing ring 4 is connected to one of the first and second collar 41, 42 and it is configured to slide in a sealing manner against the other of the first and second collar 41, 42.

The sealing ring 4 is connected to one of the first and second collar 41, 42 so as to prevent the sealing ring 4 from being able to rotate or move axially with respect to the collar to which it is connected. This connection may be permanent or may be reversible in order to allow the replacement of the sealing ring 4.

In a preferred embodiment, the sealing ring 4 is connected to the first or second collar 41, 42 mechanically, for example, by means of an interference connection. The optional connection with interference may involve, for example, an internal diameter of the first collar 41 or an external diameter of the second collar 42.

In an aspect, the sealing ring 4 engages in the first collar 41 and is preferably configured to slide in a sealing manner against the second collar 42.

As depicted in Figure 5, the sealing ring 4 advantageously has an internal diameter d4 greater than the external diameter D3 of the rolling bearing 3.

The first collar 41, the second collar 42 and the sealing ring 4 peripherally surround the rolling bearing 3.

Advantageously, the sealing ring 4 engages in the first collar 41 at the side directed towards the second collar 42 and is configured to slide in a sealing manner against the second collar 42 at the side directed towards the first collar 41.

According to another advantageous aspect, the second collar 42 at the side directed towards the first collar 41 comprises a convex surface 22. In this case, the sealing ring 4 is preferably configured to slide in a sealing manner against the convex surface 22. It will be appreciated that the convex surface 22 advantageously ensures the adhesion with sliding of the sealing ring 4 even in the presence of an accidental misalignment between the rotation axes of the first flanged element 1 and the second flanged element 2.

In some preferred embodiments, the sealing ring 4 comprises a retaining ring 17 (for example, a metal ring) and an elastomer ring 16, which are preferably co-moulded or in any case connected to each other.

The retaining ring 17 performs a function of retaining the elastomer ring 16. To this end, in an aspect, the retaining ring 17 and the elastomer ring 16 are connected to each other so as to prevent them from being able to rotate or move axially relative to each other. This connection may be permanent or reversible. In some variants, it is envisaged that the retaining ring 17 and the elastomer ring 16 can be connected by means of adhesive bonding. Additionally or alternatively, it is conceivable for the retaining ring 17 and the elastomer ring 16 to be able to be mechanically connected, for example, by means of an interference connection and/or by means of a form-fitting connection. In any case, it may be observed that, in order to ensure greater resistance and durability over time, it is preferable for the retaining ring 17 and the elastomer ring 16 to be co-moulded.

According to the invention, the retaining ring 17 is connected to one of the first and second collar 41, 42 while the elastomer ring 16 is configured to slide in a sealing manner against the other of the first and second collar 41, 42.

In a preferred embodiment, the retaining ring 17 is connected to the first or second collar 41, 42 in a mechanical manner, for example, by means of an interference connection. The optional connection with interference may involve the internal diameter of the first collar 41 or the external diameter of the second collar 42.

Preferably, the retaining ring 17 (for example, a metal ring) engages in the first collar 41 while the elastomer ring 16 is configured to slide in a sealing manner preferably against the second collar 42. Even more preferably, the elastomer ring 16 is configured to slide in a sealing manner against the convex surface 22 of the second collar 42. Therefore, it will be appreciated that, although below there will be described preferred features in relation to embodiments in which the retaining ring 17 engages in the first collar 41, while the elastomer ring 16 is configured to slide in a sealing manner against the second collar 42, these features may similarly also be used in the case in which the opposite configuration is present, that is to say, with the retaining ring 17 which engages in the second collar 42 and the elastomer ring 16 which slides against the first collar. It may be noted that, in order to be able to slide in a sealing manner against the corresponding collar, the elastomer ring 16 preferably projects from the retaining ring 17. In particular, it is preferable for the elastomer ring 16 to project from the retaining ring 17 in an axial direction, preferably towards the flanged element 1, 2 opposite the one to which the ring 17 is connected. It is further preferable for the elastomer ring 16 to project from the retaining ring 17 in a radial direction, preferably towards the axis X. This design further has the advantage of allowing an internal diameter d4 with a small extent and of reducing the risk of adhesion of the contaminating agents to the elastomer ring.

Preferably, the elastomer ring 16 comprises at least one sealing lip or, according to a variant of the invention, a double sealing lip. In order to ensure better sealing, in some embodiments the elastomer ring 16 has a conical form so as to arrange the sealing lip in contact with the sliding surface on the corresponding collar. It will be appreciated that the elastomer ring 16 and/or the relevant sealing lip apply a controlled pressure which - during operation - limits the friction, the power lost, the wear and the heating, ensuring the fixing in position of the lubricating grease and preventing the ingress of dust and other contaminating agents inside the protected chamber 15 towards the rolling bearing 3.

It must be observed that the elastomer ring 16 is constructed from a resilient elastomer material so as to optimize the sealing and to increase the service-life of the ring itself. Preferably, the elastomer ring 16 is constructed from polyurethane.

Furthermore, advantageously, the material of the elastomer ring 16 is resiliently deformable and, preferably, in a cyclical manner, in order also to ensure the sealing in the presence of a misalignment between the rotation axes of the two flanged elements 1, 2.

Instead, the retaining ring 17, as mentioned previously, may be constructed, for example, from metal and preferably steel.

In an aspect, the sealing ring 4 is a wiper ring of the type used in hydraulic cylinders (not shown) in order to scrape the dirt which is deposited on the shaft of the cylinders themselves and therefore to prevent the external contamination. In this aspect, advantageously, the sealing ring 4 is commercially available and therefore affects the cost and the complexity of the rotatable support 10 to a minimal extent.

It must be observed that the constant presence of lubricating grease inside the protected chamber 15 protects the moving parts against wear and corrosion. In order to maintain an optimum quantity of grease, in preferred embodiments the second flanged element 2 comprises a lubricating location 13 which is in the region of a second base surface 2' and which communicates with the protected chamber 15. The lubricating location 13 may have a hollow pawl with a spherical head, to which there can be connected a lubricator in order to pump grease into the protected chamber 15.

Advantageously, the support 10 also allows lubrication in the region of the convex surface 22 which is configured for the sliding of the elastomer ring 16 in a sealing manner.

In some preferred embodiments, the first flange 31 and the second flange 32 have a substantially quadrangular form. Preferably, the first flange 31 and the second flange 32 at the opposite side to the rolling bearing 3 comprise a first base surface 1' and a second base surface 2' which are substantially planar, respectively. In an aspect, the first base surface 1' and the second base surface 2' are passed through by holes 12 which are arranged to receive removable connection means with respect to respective external connection surfaces with respect to the rotatable support 10.

In preferred embodiments, the second flanged element 2 is passed through by a through-hole 14 which extends along the axis X and is configured to receive the journal 11.

The second flanged element 2 preferably comprises a gasket 5 which adheres to the second base surface 2'. When the second flange 32 is secured to an external connection surface, the gasket 5 is interposed between the second base surface 2' and the external connection surface so as to prevent the loss of lubricating grease from the support 10 or the ingress of contaminants into the support 10 through the through-hole 14.

In an aspect, the sealing ring 4 and the gasket 5 ensure the fluid-tight sealing of the protected chamber 15 for receiving the rolling bearing 3.

According to another advantageous aspect, the rolling bearing 3 is of the type with spheres with four points of contact, as shown in Figure 8. It may be noted that, in this context, the term "bearing of the type with spheres with four points of contact" is preferably intended to mean a radial oblique bearing with a ring of spheres 33 with tracks which are configured to support axial loads advantageously in both directions. It must be observed that, for a given axial load, this bearing can also support a radial load.

In some embodiments, the rolling bearing 3 can be broken down, therefore, the external ring 3b with the group of spheres 33 and relevant cage 36 can be mounted independently of two halves (not shown) of the internal ring 3a.

In an aspect, the rolling parts 33 of the bearing 3 are protected from the external agents by means of screening of the bearing itself. In practice, the rolling parts (spheres or rollers) are protected between the two rings 3a, 3b by a pair of thin metal flanges 34. It will be appreciated that this type of protection is effective against dust.

According to another advantageous aspect, the screening of the bearing 3 is fluid-tight. In substance, the rolling parts 33 are protected inside the two rings 3a, 3b by a pair of cassette seals 35 which comprise thin rubber fluid-tight flanges. Preferably, the necessary lubricant which is sufficient for the entire service-life of the bearing 3, is inserted in the region of the rolling parts 33 by the manufacturer during assembly. This type of protection is effective both against dust and against fluids.

In preferred embodiments, the cage 36 of the rolling bearing 3 is constructed from polyamide so as to increase the resistance to shocks.

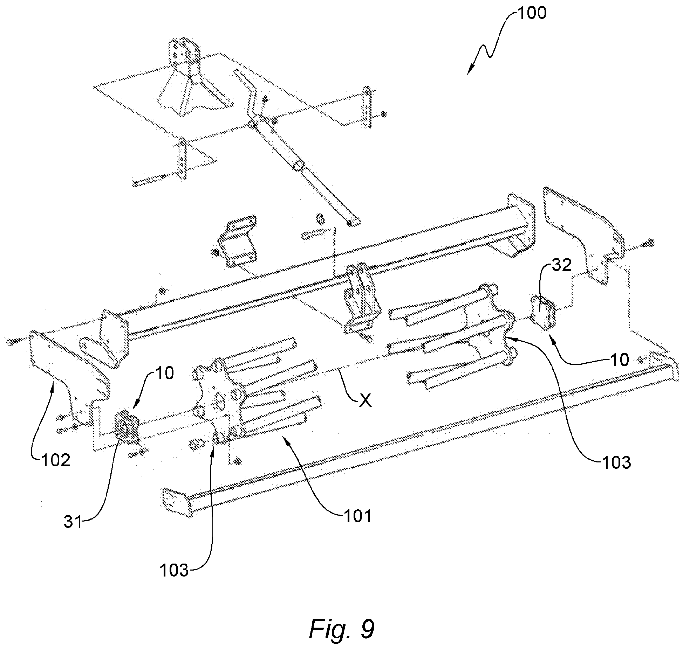

In an aspect, the rotatable support 10 can be mounted in an agricultural machine 100, as shown in Figure 9.

The agricultural machine 100 comprises, for example, a roller 101 which extends axially along an axis X, a frame 102 and at least one or two rotatable supports 10. It will be understood that, in some embodiments, the roller 101 can be replaced by a rotor of the agricultural machine 100, preferably a rotor of the type suitable for connecting an agricultural tool.

The rotatable supports 10 are configured to rotatably secure the roller 101 to the frame 102 about the axis X.

Advantageously, each of the rotatable supports 10 comprises a first flange 31 and a second flange 32 which are releasably secured to the roller 101 and the frame 102 or, vice versa, to the frame 102 and the roller 101, respectively.

In an aspect, the roller 101 extends longitudinally along the axis X parallel with the ground so as to define two lateral ends 103 which are configured to be rotatably secured to the frame 102 about the axis X by means of respective rotatable supports 10.

It will be appreciated that the roller 101 may comprise a compactor, cultivator or levelling roller. In some embodiments which are not shown, the agricultural machine 100 comprises a plurality of rollers 101 which are rotatably secured to the frame 102 by means of respective rotatable supports 10. The invention thereby solves the problem proposed while achieving a number of advantages, including:
- ensuring the sealing even in the presence of considerable angles of inclination,
- limiting the introduction of dirt, dust, mud or earth into the rotatable support and the rolling bearing,
- improving the lubrication of the rotatable support,
- minimizing the weight and the dimensions,
- increasing reliability,
- reducing the maintenance costs,
- increasing the loading capacity,
- allowing the interchangeability with the supports of pre-existing machines.

## Claims

1. A rotatable support (10) with flanged journal, comprising
• a first flanged element (1) including a first flange (31), a journal (11) which extends axially from the first flange (31) and a first collar (41) which is coaxial relative to and which also extends with the journal (11),
• a second flanged element (2) including a second flange (32) and a second collar (42) which extends axially from the second flange (32), there being interposed between the journal (11) and second collar (42) a rolling bearing (3) by means of which the first flanged element (1) is rotatably supported on the second flanged element (2), the first collar (41) and second collar (42) being at least partially axially superimposed,
• a sealing ring (4) which is interposed between the first flanged element (1) and second flanged element (2) in order to define a protected chamber (15) for receiving the rolling bearing (3),
**characterized in that** the sealing ring (4) is applied between the first collar (41) and the second collar (42) in the respective superimposition zone, the sealing ring (4) comprising a retaining ring (17) and an elastomer ring (16) which are connected to each other, the retaining ring (17) being constructed from a material with greater stiffness with respect to a material from which the elastomer ring (16) is constructed, the retaining ring (17) being connected to one of the first and second collar (41; 42), the elastomer ring (16) being configured to slide in a sealing manner against the other of the first and second collar (41; 42).

2. The rotatable support (10) according to claim 1, wherein the sealing ring (4) engages in the first collar (41) and is configured to slide in a sealing manner against the second collar (42).

3. The rotatable support (10) according to claim 1 or claim 2, wherein the retaining ring (17) is a metal ring.

4. The rotatable support (10) according to any one of the preceding claims, wherein the retaining ring (17) and the elastomer ring (16) are co-moulded.

5. The rotatable support (10) according to any one of the preceding claims, wherein the retaining ring (17) engages in the first collar (41).

6. The rotatable support (10) according to any one of the preceding claims, wherein the elastomer ring (16) is configured to slide in a sealing manner against the second collar (42).

7. The rotatable support (10) according to any one of the preceding claims, wherein the sealing ring (4) engages in the first collar (41) at the side directed towards the second collar (42) and is configured to slide in a sealing manner against the second collar (42) at the side directed towards the first collar (41).

8. The rotatable support (10) according to any one of the preceding claims, wherein the second collar (42) at the side directed towards the first collar (41) comprises a convex surface (22), the sealing ring (4) being configured to slide in a sealing manner against the convex surface (22).

9. The rotatable support (10) according to any one of the preceding claims, wherein the second collar (42) at the side directed towards the first collar (41) comprises a convex surface (22), the elastomer ring (16) being configured to slide in a sealing manner against the convex surface (22).

10. The rotatable support (10) according to any one of the preceding claims, wherein the protected chamber (15) for receiving the rolling bearing (3) is fluid-tight.

11. The rotatable support (10) according to any one of the preceding claims, wherein the rolling bearing (3) is of the type with spheres with four points of contact.

12. An agricultural machine (100) comprising a rotor (101), a frame (102) and at least one rotatable support (10) according to any one of the preceding claims, the at least one rotatable support (10) being configured to rotatably secure the rotor (101) to the frame (102).

13. The agricultural machine (100) according to claim 12, wherein the rotor (101) is of the type suitable for connecting an agricultural tool.

14. The agricultural machine (100) according to claim 12 or 13, wherein the rotor (101) is a roller which extends axially, the agricultural machine (100) comprising at least two rotatable supports (10) which are configured to rotatably secure the rotor (101) to the frame (102).

15. The agricultural machine (100) according to claim 14, wherein each of the rotatable supports (10) comprises a first flange (31) and a second flange (32) which are secured in a removable manner to the roller (101) and the frame (102) or, vice versa, to the frame (102) and the roller (101), respectively.

## Patentansprüche

1. Drehbare Halterung (10) mit Flanschzapfen, umfassend:
- ein erstes Flanschelement (1) mit einem ersten Flansch (31), einem Zapfen (11), der sich axial vom ersten Flansch (31) erstreckt, und einem ersten Kragen (41), der koaxial zum Zapfen (11) ist und sich auch mit diesem erstreckt,
- ein zweites Flanschelement (2) mit einem zweiten Flansch (32) und einem zweiten Kragen (42), der sich axial vom zweiten Flansch (32) erstreckt, wobei zwischen dem Zapfen (11) und dem zweiten Kragen (42) ein Wälzlager (3) angeordnet ist, durch das das erste Flanschelement (1) drehbar auf dem zweiten Flanschelement (2) gelagert ist, wobei der erste Kragen (41) und der zweite Kragen (42) zumindest teilweise axial übereinander liegen,
- einen Dichtungsring (4), der zwischen dem ersten Flanschelement (1) und zweiten Flanschelement (2) angeordnet ist, um eine geschützte Kammer (15) zur Aufnahme des Wälzlagers (3) zu bilden,
**dadurch gekennzeichnet, dass** der Dichtungsring (4) zwischen dem ersten Kragen (41) und zweiten Kragen (42) im jeweiligen Überlagerungsbereich eingesetzt ist, wobei der Dichtungsring (4) einen Haltering (17) und einen Elastomerring (16) aufweist, die miteinander verbunden sind, wobei der Haltering (17) aus einem Werkstoff mit größerer Steifigkeit gegenüber einem Werkstoff hergestellt ist, aus dem der Elastomerring (16) hergestellt ist, wobei der Haltering (17) mit einem der ersten und zweiten Kragen (41; 42) verbunden ist, wobei der Elastomerring (16) eingerichtet ist, um abdichtend am anderen der ersten und zweiten Kragen (41; 42) zu gleiten.

2. Drehbare Halterung (10) nach Anspruch 1, wobei der Dichtungsring (4) mit dem ersten Kragen (41) in Eingriff steht und eingerichtet ist, um abdichtend am zweiten Kragen (42) zu gleiten.

3. Drehbare Halterung (10) nach Anspruch 1 oder Anspruch 2, wobei der Haltering (17) ein Metallring ist.

4. Drehbare Halterung (10) nach einem der vorhergehenden Ansprüche, wobei der Haltering (17) und der Elastomerring (16) gemeinsam geformt sind.

5. Drehbare Halterung (10) nach einem der vorhergehenden Ansprüche, wobei der Haltering (17) mit dem ersten Kragen (41) in Eingriff steht.

6. Drehbare Halterung (10) nach einem der vorhergehenden Ansprüche, wobei der Elastomerring (16) eingerichtet ist, um abdichtend am zweiten Kragen (42) zu gleiten.

7. Drehbare Halterung (10) nach einem der vorhergehenden Ansprüche, wobei der Dichtungsring (4) mit dem ersten Kragen (41) an der zum zweiten Kragen (42) ausgerichteten Seite in Eingriff steht und eingerichtet ist, um abdichtend am zweiten Kragen (42) an der zum ersten Kragen (41) ausgerichteten Seite zu gleiten.

8. Drehbare Halterung (10) nach einem der vorhergehenden Ansprüche, wobei der zweite Kragen (42) an der zum ersten Kragen (41) ausgerichteten Seite eine konvexe Oberfläche (22) aufweist, wobei der Dichtungsring (4) eingerichtet ist, um abdichtend auf der konvexen Oberfläche (22) zu gleiten.

9. Drehbare Halterung (10) nach einem der vorhergehenden Ansprüche, wobei der zweite Kragen (42) an der zum ersten Kragen (41) ausgerichteten Seite eine konvexe Oberfläche (22) aufweist, wobei der Elastomerring (16) eingerichtet ist, um abdichtend auf der konvexen Oberfläche (22) zu gleiten.

10. Drehbare Halterung (10) nach einem der vorhergehenden Ansprüche, wobei die geschützte Kammer (15) zur Aufnahme des Wälzlagers (3) flüssigkeitsdicht ist.

11. Drehbare Halterung (10) nach einem der vorhergehenden Ansprüche, wobei das Wälzlager (3) ein Kugellager mit vier Kontaktpunkten ist.

12. Landwirtschaftliche Maschine (100) mit einem Rotor (101), einem Rahmen (102) und zumindest einer drehbaren Halterung (10) nach einem der vorhergehenden Ansprüche, wobei die zumindest eine drehbare Halterung (10) eingerichtet ist, um den Rotor (101) drehbar am Rahmen (102) zu befestigen.

13. Landwirtschaftliche Maschine (100) nach Anspruch 12, wobei der Rotor (101) für einen Anschluss eines landwirtschaftlichen Werkzeugs geeignet ist.

14. Landwirtschaftliche Maschine (100) nach Anspruch 12 oder 13, wobei der Rotor (101) eine sich axial erstreckende Rolle ist, wobei die landwirtschaftliche Maschine (100) zumindest zwei drehbare Halterungen (10) aufweist, die eingerichtet sind, um den Rotor (101) drehbar am Rahmen (102) zu befestigen.

15. Landwirtschaftliche Maschine (100) nach Anspruch 14, wobei jede der drehbaren Halterungen (10) einen ersten Flansch (31) und einen zweiten Flansch (32) aufweist, die entfernbar an der Rolle (101) und dem Rahmen (102) oder umgekehrt am Rahmen (102) und der Rolle (101) befestigt sind.

## Revendications

1. Support rotatif (10) avec tourillon à bride, comprenant
- un premier élément à bride (1) incluant une première bride (31), un tourillon (11) qui s'étend axialement à partir de la première bride (31) et un premier collier (41) qui est coaxial par rapport au tourillon (11) et qui s'étend également avec celui-ci,
- un second élément à bride (2) incluant une seconde bride (32) et un second collier (42) qui s'étend axialement à partir de la seconde bride (32), un roulement (3) étant interposés entre le tourillon (11) et le second collier (42), au moyen duquel le premier élément à bride (1) est supporté en rotation sur le second élément à bride (2), le premier collier (41) et le second collier (42) étant au moins partiellement superposées axialement,
- un anneau d'étanchéité (4) qui est interposé entre le premier élément à bride (1) et le second élément à bride (2) afin de définir une chambre protégée (15) pour recevoir le roulement (3),
**caractérisé en ce que** l'anneau d'étanchéité (4) est appliqué entre le premier collier (41) et le second collier (42) dans la zone de superposition respective, l'anneau d'étanchéité (4) comprenant un anneau de retenue (17) et un anneau en élastomère (16) qui sont reliés l'un à l'autre, l'anneau de retenue (17) étant construit à partir d'un matériau ayant une plus grande rigidité par rapport à un matériau à partir duquel l'anneau en élastomère (16) est construit, l'anneau de retenue (17) étant relié à l'un du premier et du second collier (41 ; 42), l'anneau en élastomère (16) étant configuré pour glisser de manière étanche contre l'autre du premier et du second collier (41 ; 42).

2. Support rotatif (10) selon la revendication 1, dans lequel l'anneau d'étanchéité (4) s'engage dans le premier collier (41) et est configurée pour glisser de manière étanche contre le second collier (42).

3. Support rotatif (10) selon la revendication 1 ou la revendication 2, dans lequel l'anneau de retenue (17) est un anneau métallique.

4. Support rotatif (10) selon l'une quelconque des revendications précédentes, dans lequel l'anneau de retenue (17) et l'anneau en élastomère (16) sont co-moulés.

5. Support rotatif (10) selon l'une quelconque des revendications précédentes, dans lequel l'anneau de retenue (17) s'engage dans le premier collier (41).

6. Support rotatif (10) selon l'une quelconque des revendications précédentes, dans lequel l'anneau en élastomère (16) est configurée pour glisser de manière étanche contre le second collier (42).

7. Support rotatif (10) selon l'une quelconque des revendications précédentes, dans lequel l'anneau d'étanchéité (4) s'engage dans le premier collier (41) du côté dirigé vers le second collier (42) et est configurée pour glisser de manière étanche contre le second collier (42) du côté dirigé vers le premier collier (41).

8. Support rotatif (10) selon l'une quelconque des revendications précédentes, dans lequel le second collier (42) du côté dirigé vers le premier collier (41) comprend une surface convexe (22), l'anneau d'étanchéité (4) étant configuré pour glisser de manière étanche contre la surface convexe (22).

9. Support rotatif (10) selon l'une quelconque des revendications précédentes, dans lequel le second collier (42) du côté dirigé vers le premier collier (41) comprend une surface convexe (22), l'anneau en élastomère (16) étant configurée pour glisser de manière étanche contre la surface convexe (22).

10. Support rotatif (10) selon l'une quelconque des revendications précédentes, dans lequel la chambre protégée (15) destinée à recevoir le roulement (3) est étanche aux fluides.

11. Support rotatif (10) selon l'une quelconque des revendications précédentes, dans lequel le roulement (3) est du type à sphères à quatre points de contact.

12. Machine agricole (100) comprenant un rotor (101), un châssis (102) et au moins un support rotatif (10) selon l'une quelconque des revendications précédentes, le au moins un support rotatif (10) étant configuré pour fixer de manière rotative le rotor (101) au châssis (102).

13. Machine agricole (100) selon la revendication 12, dans laquelle le rotor est du type adapté à la connexion d'un outil agricole.

14. Machine agricole (100) selon la revendication 12 ou 13, dans laquelle le rotor (101) est un rouleau qui s'étend axialement, la machine agricole (100) comprenant au moins deux supports rotatifs (10) qui sont configurés pour fixer de manière rotative le rotor (101) au châssis (102).

15. Machine agricole (100) selon la revendication 14, dans laquelle chacun des supports rotatifs (10) comprend une première bride (31) et une seconde bride (32) qui sont fixées de manière amovible au rouleau (101) et au châssis (102) ou, inversement, au châssis (102) et au rouleau (101), respectivement.
